# EUROPÄISCHE PATENTSCHRIFT

(11) **EP 2 672 153 B1**
(45) Veröffentlichungstag und Bekanntmachung des Hinweises auf die Patenterteilung: **07.08.2019**
(21) Anmeldenummer: 12004294.0
(22) Anmeldetag: 05.06.2012
(51) Int. Cl.: F16K 11/087

(54) **Kugelhahn**
Ball valve
Robinet à boisseau sphérique

(43) Veröffentlichungstag der Anmeldung: 11.12.2013
(60) Teilanmeldung: 16000073.3
(73) Patentinhaber: Delta Systemtechnik GmbH, 29227 Celle (DE)
(72) Erfinder: Geck, Thomas, 30559 Hannover (DE)
(74) Vertreter: Farago-Schauer, Peter Andreas

(56) Entgegenhaltungen:
- EP-A1- 0 350 017
- EP-A1- 0 566 920
- DE-A1- 3 104 355
- FR-A- 1 296 093
- US-A- 3 450 151
- US-A- 5 551 467

## Beschreibung

Die Erfindung betrifft einen Kugelhahn.

Kugelhähne dienen zum Sperren und Öffnen des Durchflusses von flüssigen oder gasförmigen Medien in Rohrleitungen.

Eine Sperrung ist u. a. dann erforderlich, wenn ein Rohrleitungsabschnitt von einer unter Mediumdruck stehenden Rohrleitung getrennt werden muss, um z. B. in diesem Rohrleitungsabschnitt gelegene Aggregate austauschen zu können. Dazu werden an einem oder beiden Enden des Rohrleitungsabschnitts angeordnete Kugelhähne geschlossen. Der getrennte Rohrleitungsabschnitt muss anschließend druckentlastet und ggf. das noch in ihm befindliche Medium kontrolliert entleert werden. Hierzu ist es bekannt im druckzuentlastenden und zu entleerenden Rohrleitungsabschnitt noch einen weiteren Kugelhahn oder ein Ventil mit einer Entleerungsöffnung anzuordnen. Diese Lösung erfordert eine zusätzliche Armatur und einen dadurch bedingten Platzbedarf und ist in kompakten Anlagen nachteilig.

Ein Kugelhahn ist beispielsweise aus der EP 2 169 286 A2 bekannt. Dort ist eine Hohlspindel vorgesehen, von deren Hohlraum aus sich eine Kammer in eine Stellkammer des Kugelhahns erstreckt. In der Hohlspindel ist ein Sensor angeordnet, der sich mit einem Messteil in der Kammer befindet. Die Kammer kann eine Öffnung zur Stellkammer aufweisen, wenn es sich bei dem Sensor um einen Drucksensor handelt. In jedem Falle ist der Sensor in der Hohlspindel eingegossen, damit keine Öffnung der Kammer zur Umgebung hergestellt wird und das durch den Kugelhahn geführte Medium nicht nach außen entweichen kann.

Die EP 0 566 920 A1 offenbart eine Sicherheitsgruppe zur Absicherung von Trinkwassererwärmern mit einem Kükenventil, einem Rückflussverhinderer und einem Prüfkanal. Ein erster Kanalabschnitt des Prüfkanals verläuft in dem Ventilküken senkrecht zum Durchgangskanal und verbindet bei geschlossenem Kükenventil den Durch-gangskanal mit einem Raum stromauf des Rückflussverhinderers. Ein Schaft des Ven-tilkükens enthält den zweiten Kanalabschnitt des Prüfkanals. Dieser Kanalabschnitt steht mit dem Durchgangskanal in Verbindung. Der Längskanal ist durch das lösbare Abschlussglied abgeschlossen.

Die FR 1.296.093 B offenbart ein Absperrventil aus dem Bergbau. Über ein ma-nuell bewegliches Wellenbedienelement kann der Innenraum einer angeschlossenen Leitung wahlweise mit der weiterführenden Leitung, somit durchfließend, oder hin zu einer Probeöffnung gestellt werden.

Die DE 31 04 355 A1 offenbart einen Entlüftungsstopfen, insbesondere für Heizkörper. Ein im Inneren des Entlüftungstopfens befindlicher Luftabströmkanal führt zum Umfang des Entlüftungsstopfens. Die dortige Verschlussschraube ist in einer Querbohrung des Entlüftungsstopfens eingeschraubt und weist einen im Innern sich vom Kopfende bis in den Halsansatz erstreckenden Kanal auf.

Die nachveröffentlichte deutsche nationale Patentanmeldung 10 2011 013 097.7 offenbart einen Kugelhahn mit einem Zugriffskanal. Es ist dort aber nicht davon die Rede, dass das Gewinde aus Metall gefertigt sein soll. Dies ist auch keine technisch zwingende Ausführungsform. Hier vorliegend wird demgegenüber eine metallene Ausführungsform beansprucht.

Der Erfindung liegt die Aufgabe zugrunde, den Stand der Technik zu verbessern oder ihm eine gute Alternative zur Verfügung zu stellen. Diese Aufgabe löst der Gegenstand des unabhängigen Patentanspruchs. Die abhängigen Ansprüche beinhalten beispielhafte optionale Weiterbildungen.

Generell sei erwähnt, dass im Rahmen dieser Patentanmeldung unter dem Begriff des Steuerns auch als Option die speziellere Ausführung des Regelns enthalten sein soll.

Außerdem sei darauf hingewiesen, dass ein unbestimmter Ausdruck "ein", "zwei" usw. immer im Sinne einer "mindestens, aber insbesondere"-Angabe zu verstehen sein soll, also "mindestens ein, insbesondere genau ein" usw., sofern sich nicht im Einzelfall aus dem Kontext ergibt, dass dort etwa nur "genau ein" usw. gemeint sein soll.

Die den Vorrichtungs-Patentansprüchen beschriebene Ausführung ist bevorzugt DVGW-konform ausgeführt und für eine Einsatz im Trinkwasser geeignet.

Der Betätiger kann vor allem als Welle ausgebildet sein, wobei eine solche Welle gut von einem Griff angetrieben sein kann.

Meist ist eine solche Welle rechtwinklig oder zum Beispiel unter einen Winkel von 45 ° zu einer Durchflussrichtung von Zuleitung zu Ableitung angeordnet.

Das Stellelement ist üblicherweise eine Kugel oder eine Teilkugel mit sphärischer Außenform. Sie kann in einem sphärischen Hohlraum im Kugelhahn gelagert sein, in welchen die Zu- und die Ableitung mit vollem Querschnitt münden.

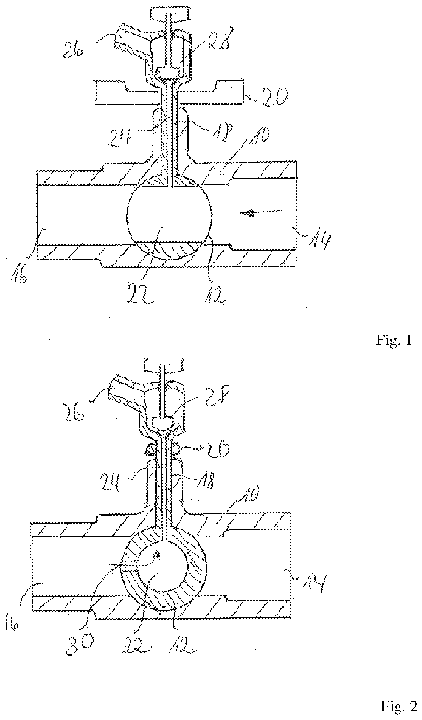

Nachstehend wird die Erfindung anhand zweier Ausführungsbespiele unter Bezugnahme auf die Zeichnung näher erläutert. Es zeigen
- Fig. 1: einen Schnitt durch einen Kugelhahn im geöffneten Zustand,
- Fig. 2: einen Schnitt durch den in der Figur 1 gezeigten Kugelhahn im geschlossenen Zustand, und
- Fig. 3: stark vereinfacht einen Schnitt durch eine zweite Ausführungsform eines Kugelhahns, mit einer Gewindebohrung in einem Gehäusestutzen.

Der Kugelhahn besteht in üblicher Weise aus einem Gehäuse 10, einem Kücken 12 mit einem Durchflussraum 22, einem mit dem Kücken 12 verbundenen Betätigungsschaft 18 und einem Betätigungsgriff 20 und besitzt einen Zulauf 14 und einen Ablauf 16. Zusätzlich weist der Betätigungsschaft 18 für das Küken 12 eine durchgehende Axialbohrung 24 auf, die in den Durchflussraum 22 des Kückens 12 führt. Auf dem Betätigungsschaft 18 ist eine Entleerungsöffnung 26 angeordnet, die mittels eines Entleerungsventils 28 oder Entleerungshahns öffne und schließbar ist. Das Kücken 12 weist ferner eine Öffnung 30 auf, die im geschlossenen Zustand des Kückens 12 in der Wandung zwischen dessen Durchtrittsraum 22 und dem Ablauf angeordnet 16 ist.

Im normalen Betrieb ist das Entleerungsventil 28 geschlossen. Der Kugelhahn kann in üblicher Weise durch eine 90° Drehung des Betätigungsgriffs 20 vom geöffneten in den geschlossenen Zustand und umgekehrt überführt werden. Dabei wird über den Betätigungsschaft 18 das Kücken im Gehäuse 10 gedreht. In der geöffneten Stellung des Kükens 12 liegen die Öffnungen des Durchflussraumes 22 in Flucht mit dem Zulauf 14 und Ablauf 16, sodass Medium das Küken 12 durchströmen kann. In der geschlossenen Stellung des Kükens 12 liegen die Öffnungen des Durchflussraumes 22 quer zum Zulauf 14 und Ablauf 16 und die Wandungen des Kükens sperren die Verbindung zwischen Zulauf 14 und Ablauf 16.

Durch die zusätzliche Öffnung 30 im Küken 12, die im geschlossenen Zustand des Kückens zwischen dessen Durchtrittsraum 22 und dem Ablauf 16 liegt und die Bohrung 24 im Betätigungsschaft 18 ist auch im geschlossenen Zustand des Kückens 12 eine Verbindung zwischen dem Ablauf 16 und der Bohrung 24 im Betätigungsschaft 18 vorhanden oder kann hergestellt werden. Durch Öffnen des Entleerungsventils 28 kann so der hinter dem Ablauf 16 befindliche Rohrabschnitt entleert werden.

Das Entleerungsventil 28 kann auf das freie Ende des Betätigungsschaftes 18 vor der Entleerungsöffnung 26 aufgesetzt sein. Erfindungsgemäß ist im Küken 12 auch ein weiteres Kücken zur Bildung eines Entleerungshahns angeordnet. Durch das zusätzliche Küken wird dabei die zusätzliche Öffnung im Hauptküken 12 geöffnet oder geschlossen.

Im Rahmen der hier vorliegenden Anmeldung dient das Kücken 12 als Stellelement, wobei in dessen sphärischer Form der Durchflussraum 22 den Stellkanal verkörpert. Der Betätigungsschaft 18 verkörpert den Betätiger. Das Gewinde ist nicht dargestellt, lässt sich aber als Außengewinde am Stutzen des Gehäuses leicht vorstellen.

Um eine reine Metall-auf-Metall-Lagerung zu vermeiden, ist in der Lagerung des Stellelements eine Metall-Kunststoff-Gleitlagerung oder eine Kunststoff-Kunststoff-Gleitlagerung vorgesehen. Beispielsweise kann das Stellelement vollständig aus einer Kunststoffkugel gefertigt sein und in dem metallenen Gehäuse des Kugelhahns drehbar gelagert sein.

Weiterhin ist es auch möglich die Bohrung 24 im Betätigungsschaft 18 zur Durchführung einer Messleitung zu nutzen, die 10 einen im Durchflussraum 22 des Kükens 12 angeordneten Sensor zur Erfassung von Medienparametern mit einem externen Erfassungsgerät verbindet. Der Vorteil dieser Lösung besteht darin, dass die Messleitungen an derselben Stelle aus dem Kugelhahn austreten, an der auch der Betätigungsgriff 20 angeordnet ist. Die Einbautiefe des Kugelhahns wird so nicht verändert.

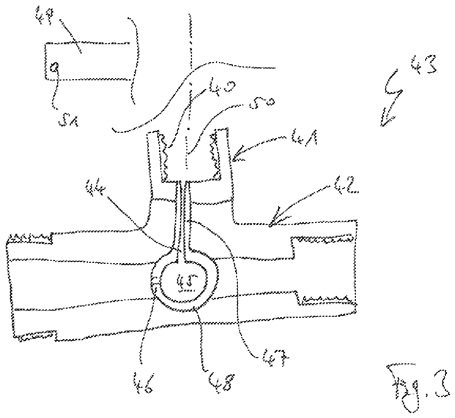

Die zweite Ausführungsform in Figur 3, ebenfalls mit einer Metall-Kunststoff-Lagerung, (nicht zeichnerisch dargestellt) zeigt schematisch und sehr stark vereinfacht ein Innengewinde 40 in einem Stutzen 41 des Gehäuses 42 des Kugelhahns 43.

Es versteht sich, dass es außerdem sinnvoll ist, den Zugriffskanal 44 in den Stellkanal 45 bzw. hin zur Weiterführungsöffnung 46 mit einem manuellen Stellgriff zu versehen, der den Betätiger 47 (hier eine Hohlwelle) und somit das Stellelement 48 verdreht. Am Stellgriff 49 (nur angedeutet), der um seine Achse 50 drehbar ist, ist eine Verplombungsöse 51 vorgesehen.

### Bezugszeichenliste

- 10: Gehäuse
- 12: Kücken
- 14: Zulauf
- 16: Ablauf
- 18: Betätigungsschaft
- 20: Betätigungsgriff
- 22: Durchflussraum
- 24: Axialbohrung
- 26: Entleerungsöffnung
- 28: Entleerungsventil
- 30: Öffnung
- 40: Innengewinde
- 41: Stutzen
- 42: Gehäuse
- 43: Kugelhahn
- 44: Zugriffskanal
- 45: Stellkanal
- 46: Weiterführungsöffnung
- 47: Betätiger
- 48: Stellelement
- 49: Stellgriff
- 50: Achse
- 51: Verplombungsöse

## Patentansprüche

1. Kugelhahn mit einem Gehäuse (10), mit einem Stellkanal (22, 45), mit einer Zuleitung (14), mit einer Ableitung (16), mit einem Betätiger (18, 47) und mit einem Betätigungsgriff (20; 49),
geeignet zum wahlweisen Öffnen, Schließen und Steuern des Durchflusses eines Mediums durch den Kugelhahn von der stromaufwärtigen Zuleitung (14) durch den Stellkanal (22; 45) zu der stromabwärtigen Ableitung (16),
wobei
der Betätiger (18; 47) mit einem Stellelement (12; 48) innerhalb einer Stellkammer zum eindeutigen Bewegen des Stellelements (12; 48) zum Vergrößern und Verkleinern des Stellkanals (22; 45) verbunden ist,
wobei
der Kugelhahn zusätzlich zum Stellkanal (22; 45) einen schließ- und öffenbaren Zugriffskanal (24; 44) aufweist, welcher in geöffnetem Zustand den Stellkanal (22; 45) entlang des Betätigers (18; 47) zur Umgebung öffnet,
wobei
der Kugelhahn ein Gewinde, vor allem ein Innengewinde (40), aufweist, gefertigt aus Metall, mittels dessen bei bereits verbundener Zu- und Ableitung (14, 16) eine Zugriffsleitung dicht anschließbar ist, sodass diese bei geöffnetem Zugriffskanal (24; 44) eine Verbindung zum Stellkanal (22; 45) hat,
wobei
eine sphärische Lagerung für das Stellelement (12; 48) vorgesehen ist und eine Kunststoffoberfläche aufweist, und zwar am Stellelement (12; 48) außen und/oder am umgebenden Lager innen, während das Gehäuse (10) des Kugelhahns zumindest zum Teil aus Metall gefertigt ist,
wobei der Zugriffskanal (24; 44) durch den Betätiger (18; 47) hindurch zur Umgebung verläuft, wobei der Betätiger (18; 47) als Hohlwelle ausgeführt ist und/oder der Zugriffskanal (24; 44) unterhalb eines Betätigungsgriffs (20; 49) endet und seitlich herausläuft oder bis zum axialen Ende geführt ist, wobei der Zugriffskanal (24; 44) eine Weiterführungsöffnung (30; 46) aufweist, durch welche sich der Zugriffskanal (24; 44) bis in die Zu- oder Ableitung (14, 16) erstreckt, sodass wahlweise die Zu- und die Ableitung (14, 16) durch den Zugriffskanal (24; 44) zur Umgebung schließ- und öffenbar sind, um Heizmedien einer Heizungs- und/oder Nahwärme- oder Fernwärmeanlage, oder Trinkwasser einer Sanitäranlage zu befüllen oder zu entnehmen,
indem die Weiterführungsöffnung (30; 46) zur Zuleitung (14) drehbar ist oder wahlweise zur Ableitung (16) drehbar ist,
wobei in dem Stellelement (12; 48) ein weiteres Stellelement zur Bildung eines Entleerungshahns angeordnet ist, womit die Weiterführungsöffnung (30; 46) geöffnet oder geschlossen ist.

2. Kugelhahn nach Anspruch 1, ***dadurch gekennzeichnet, dass*** die Weiterführungsöffnung (30; 46) in einer seitlichen Wandung des Stellelements (12; 48) angeordnet ist, wobei das Stellelement (12; 48) sphärisch ist und die Weiterführungsöffnung (30; 46) an einer sphärischen Oberfläche des Stellelements (12; 48) seitlich vom Stellkanal (22; 45) ausgeht.

3. Kugelhahn nach einem der vorstehenden Ansprüche, ***dadurch gekennzeichnet, dass*** das Gewinde für die Zugriffsleitung (14) als ein Innengewinde (40) vorgesehen ist, insbesondere an einer Innenseite einer Gewindebohrung.

4. Kugelhahn nach einem der vorstehenden Ansprüche, ***dadurch gekennzeichnet, dass*** die Gewindebohrung an einem Stutzen (41) vorgesehen ist, welcher einen Betätigungsgriff (20; 49) für den Betätiger (18; 47) aufweist.

5. Kugelhahn nach einem der vorstehenden Ansprüche, ***dadurch gekennzeichnet, dass*** die zur Zu- oder Ableitung (14, 16) gedrehte Weiterführungsöffnung (30; 46) gegenüber der jeweils anderen Leitung (14, 16) verschlossen ist, wobei bevorzugt jede der beiden Leitungen (14, 16) wahlweise ansteuerbar ist und/oder wobei bevorzugt die Weiterführungsöffnung (30; 46) zu einer der beiden Leitungen (14, 16) geöffnet und bevorzugt koaxial ausgerichtet ist, wenn der Stellkörper (12; 48) vollständig geschlossen ist, vor allem bei einer rechtwinkligen Verdrehung gegenüber einer Winkelposition mit maximalem Durchflussdurchmesser.

6. Kugelhahn nach einem der vorstehenden Ansprüche, ***dadurch gekennzeichnet, dass*** mindestens eine zweite Weiterführungsöffnung (30; 46) an einer sphärischen Oberfläche des Stellelements (12; 48) vorgesehen ist, sodass bei Drehen des Stellelements (12; 48) in unterschiedliche Winkelpositionen der Zugriffskanal (24; 44) zum Stellkanal (22; 45) geöffnet bleibt, sich der Stellkanal (22; 45) aber durch unterschiedliche Weiterführungsöffnungen (30; 46) zur Zu- oder Ableitung (14, 16) oder zu beiden öffnet, indem bei den unterschiedlichen Winkelpositionen jeweils andere Weiterführungsöffnungen (30; 46) von der Lagerfläche des Stellelements (12; 48) geschlossen gehalten bzw. geöffnet werden..

7. Kugelhahn nach einem der vorstehenden Ansprüche, ***dadurch gekennzeichnet, dass*** der Zugriffskanal (24; 44) mittels eines Ventils (28) öffen- und schließbar ist.

8. Kugelhahn nach einem der vorstehenden Ansprüche, ***dadurch gekennzeichnet, dass*** eine Bypassbohrung vorgesehen ist, welche zu einer Hinterspülung des Stellelements (12; 48) führt.

## Claims

1. Ball valve having a housing (10), an actuation channel (22, 45), a feeding line (14), a draining line (16), an actuating device (18, 47) and an actuating handle (20; 49),
suitable for selectively opening, closing and controlling the flow of a medium through the ball valve from the upstream feeding line (14) to the downstream draining line (16) through the actuation channel (22; 45),
wherein
the actuating device (18; 47) is connected to an actuator (12; 48) within an actuation chamber for clearly moving the actuator (12; 48) in order to enlarge or reduce the size of the actuation channel (22; 45),
wherein
in addition to the actuation channel (22; 45), the ball valve has an access channel (24; 44) which can be closed and opened and which, in the open state, opens the actuation channel (22; 45) towards the environment along the actuating device (18; 47),
wherein
the ball valve has a thread, in particular an internal thread (40), made of metal, by means of which with the feeding and draining lines (14, 16) already connected, an access line can be connected tightly, so that with the access channel (24; 44) open, the latter line is connected to the actuation channel (22; 45),
wherein
a spherical bearing is provided for the actuator (12; 48) and has a plastic surface, namely on the outside of the actuator (12; 48) and/or on the inside of the surrounding bearing, whereas the housing (10) of the ball valve is at least partly made of metal,
where the access channel (24; 44) extends through the actuating device (18; 47) towards the environment, the actuating device (18; 47) being embodied as a hollow shaft, and/or the access channel (24; 44) terminating below an actuation handle (20; 49) and exiting laterally or being guided to the axial end,
wherein
the access channel (24; 44) has a continuation opening (30; 46) through which the access channel (24; 44) extends into the feeding or draining line (14, 16) so that selectively the feeding and draining lines (14, 16) can be closed and opened towards the environment by means of the access channel (24; 44) for filling in or removing heating media of a heating and/or short-distance heating or long-distance heating utility, or drinking water from a sanitary utility,
since the continuation opening (30; 46) is rotatable towards the feeding line (14) or selectively towards the draining line (16),
an additional actuator for forming a drain valve being arranged in the actuator (12; 48), opening or closing the continuation opening (30; 46).

2. Ball valve according to Claim 1, ***characterized in that*** the continuation opening (30; 46) is arranged in a lateral wall of the actuator (12; 48), the actuator (12; 48) being spherical and the continuation opening (30; 46) laterally exiting from the actuation channel (22; 45) in a spherical surface of the actuator (12; 48).

3. Ball valve according to one of the above Claims, ***characterized in that*** the thread for the access line (14) is embodied as an internal thread (40), in particular on an interior of a thread bore.

4. Ball valve according to one of the above Claims, ***characterized in that*** the thread bore is provided on a connection piece (41) which has an actuating handle (20; 49) for the actuating device (18; 47).

5. Ball valve according to one of the above Claims, ***characterized in that*** the continuation opening (30; 46) rotated towards the feeding or the draining line (14, 16) is closed with respect to the other line (14, 16); where preferably each of the two lines (14, 16) can be controlled selectively and/or where preferably the continuation opening (30; 46) is open towards one of the two lines (14, 16) and is preferably oriented coaxially when the actuator (12; 48) is completely closed, especially in case of perpendicular displacement with respect to an angular position with maximum flow diameter.

6. Ball valve according to one of the above Claims, ***characterized in that*** at least one second continuation opening (30; 46) is provided in a spherical surface of the actuator (12; 48) such that when the actuator (12; 48) is rotated in different angular positions, the access channel (24; 44) remains open towards the actuation channel (22; 45) but the actuation channel (22; 45) opens towards the feeding line or the draining line (14, 16) or to both via different continuation openings (30; 46), since in the different angular positions, different respective continuation openings (30; 46) are kept closed or opened, respectively, by the bearing surface of the actuator (12; 48).

7. Ball valve according to one of the above Claims, ***characterized in that*** the access channel (24; 44) can be opened and closed by means of a valve (28).

8. Ball valve according to one of the above Claims, ***characterized in that*** a bypass bore is provided which leads to a rear rinsing device of the actuator (12; 48).

## Revendications

1. Robinet à boisseau sphérique, pourvu d'un corps (10), d'un canal de réglage (22, 45), d'un conduit d'alimentation (14), d'un conduit d'évacuation (16), d'un actionneur (18, 47) et d'une poignée de manoeuvre (20; 49)
adaptée pour ouvrir, fermer au choix et pour commander le débit d'un fluide à travers le robinet à boisseau sphérique, du conduit d'alimentation (14) placé en amont, à travers le canal de réglage (22; 45), vers le conduit d'évacuation (16) placé en aval,
l'actionneur (18; 47) étant relié avec un élément de réglage (12; 48) à l'intérieur d'un compartiment de réglage, pour le déplacement univoque de l'élément de réglage (12; 48) aux fins d'agrandir et de réduire le canal de réglage (22; 45),
le robinet à boisseau sphérique comportant en sus du canal de réglage (22; 45) un canal d'accès (24; 44) susceptible de s'ouvrir et de se fermer, qui en position ouverte ouvre le canal de réglage (22; 45) sur l'environnement, le long de l'actionneur (18; 47),
le robinet à boisseau sphérique comportant un filetage, prioritairement un taraudage (40), fabriqué en métal, au moyen duquel, lorsque les conduits d'alimentation et d'évacuation (14, 16) sont déjà reliés, un conduit d'accès peut se raccorder de manière étanche, de sorte que lorsque le canal d'accès (24; 44) est ouvert, il soit en liaison avec le canal de réglage (22; 45),
un logement sphérique étant prévu pour l'élément de réglage (12; 48) et présentant une surface en matière plastique, à savoir sur l'élément de réglage (12; 48), à l'extérieur et/ou sur le palier périphérique, à l'intérieur, alors que le corps (10) du robinet à boisseau sphérique est fabriqué au moins en partie en métal,
le canal d'accès (24; 44) s'écoulant à travers l'actionneur (18; 47) vers l'environnement, l'actionneur (18; 47) étant réalisé sous la forme d'un arbre creux et/ou le canal d'accès (24; 44) se terminant en-dessous d'une poignée de manoeuvre (20; 49) et débordant latéralement ou étant tiré jusqu'à l'extrémité axiale,
le canal d'accès (24; 44) comportant un orifice de prolongement (30; 46) à travers lequel le canal d'accès (24; 44) s'étend jusque dans le conduit d'alimentation ou d'évacuation (14, 16), de sorte qu'au choix, les conduits d'alimentation et d'évacuation (14, 16) soient susceptibles d'être fermés ou ouverts sur l'environnement à travers le canal d'accès (24; 44), pour charger ou prélever des fluides chauffants d'un système de chauffage et/ou de chauffage de proximité ou de chauffage urbain ou de l'eau potable d'une installation sanitaire,
en ce que l'orifice de prolongement (30; 46) est rotatif en direction du conduit d'alimentation (14) ou au choix, en direction du conduit d'évacuation (16),
dans l'élément de réglage (12; 48) étant placé un élément de réglage supplémentaire, pour créer un robinet de vidange, avec lequel l'orifice de prolongement (30; 46) étant ouvert ou fermé.

2. Robinet à boisseau sphérique selon la revendication 1, **caractérisé en ce que** l'orifice de prolongement (30; 46) est placé dans une paroi latérale de l'élément de réglage (12; 48), l'élément de réglage (12; 48) étant de forme sphérique et l'orifice de prolongement (30; 46) partant latéralement du canal de réglage (22; 45) sur une surface sphérique de l'élément de réglage (12; 48).

3. Robinet à boisseau sphérique selon l'une quelconque des revendications précédentes, **caractérisé en ce que** le filetage pour le conduit d'accès (14) est prévu sous la forme d'un taraudage (40), notamment sur une face intérieure d'un trou taraudé.

4. Robinet à boisseau sphérique selon l'une quelconque des revendications précédentes, **caractérisé en ce que** le trou taraudé est prévu sur un embout (41), lequel comporte une poignée de manoeuvre (20; 49) pour l'actionneur (18; 47).

5. Robinet à boisseau sphérique selon l'une quelconque des revendications précédentes, **caractérisé en ce que** l'orifice de prolongement (30; 46) tourné en direction du conduit d'alimentation ou d'évacuation (14, 16) est fermé par rapport à l'autre conduit (14, 16) respectif, de préférence chacun des deux conduits (14, 16) étant activable au choix et/ou de préférence l'orifice de prolongement (30; 46) étant ouvert en direction de l'un des deux conduits (14, 16) et orienté de préférence de manière coaxiale lorsque le corps de réglage (12; 48) est entièrement fermé, prioritairement lors d'une rotation à angle droit par rapport à une position angulaire à diamètre de passage maximum.

6. Robinet à boisseau sphérique selon l'une quelconque des revendications précédentes, **caractérisé en ce qu'**il est prévu au moins un deuxième orifice de prolongement (30; 46) sur une surface sphérique de l'élément de réglage (12; 48), de sorte que lors d'une rotation de l'élément de réglage (12; 48) dans différentes positions angulaires, le canal d'accès (24; 44) reste ouvert sur le canal de réglage (22; 45), mais que le canal de réglage (22; 45) s'ouvre à travers différents orifices de prolongement (30; 46) vers le conduit d'alimentation ou d'évacuation (14, 16) ou vers les deux, **en ce que** dans les différentes positions angulaires, chaque fois d'autres orifices de prolongement (30; 46) soient maintenus fermés ou ouverts par la surface de palier de l'élément de réglage (12; 48).

7. Robinet à boisseau sphérique selon l'une quelconque des revendications précédentes, **caractérisé en ce que** le canal d'accès (24; 44) est susceptible d'être ouvert ou fermé au moyen d'une soupape (28).

8. Robinet à boisseau sphérique selon l'une quelconque des revendications précédentes, **caractérisé en ce qu'**il est prévu un perçage de dérivation qui conduit à un rétro-lavage de l'élément de réglage (12; 48).
